# EUROPÄISCHE PATENTSCHRIFT

(11) **EP 2 126 300 B1**
(45) Veröffentlichungstag und Bekanntmachung des Hinweises auf die Patenterteilung: **31.03.2010**
(21) Anmeldenummer: 07822613.1
(22) Anmeldetag: 15.11.2007
(51) Int. Cl.: F01N 3/20, F02M 61/14

(54) **HALTERUNGSVORRICHTUNG FÜR EIN REDUKTIONSMITTEL-DOSIERVENTIL**
MOUNTING DEVICE FOR A REDUCING AGENT DOSING VALVE
DISPOSITIF DE FIXATION POUR SOUPAPE DE DOSAGE D'AGENT DE RÉDUCTION

(30) Priorität: 28.12.2006 DE 102006061733
(43) Veröffentlichungstag der Anmeldung: 02.12.2009
(73) Patentinhaber: Robert Bosch GmbH, 70442 Stuttgart (DE)
(72) Erfinder: HAEBERER, Rainer, 75015 Bretten (DE); KIENZLE, Burghard, 70839 Gerlingen (DE); GRIESINGER, Siegbert, 75443 Oetisheim (DE); HORN, Matthias, 71691 Freiberg (DE)
(86) Internationale Anmeldenummer: PCT/EP2007/062367
(87) Internationale Veröffentlichungsnummer: WO 2008/080687

(56) Entgegenhaltungen:
- EP-A- 1 223 337
- EP-A- 1 662 108
- DE-A1- 10 241 698
- DE-A1-102005 011 574

## Beschreibung

### Stand der Technik

Die Erfindung geht aus von einem Dosiermodul für flüssige Reduktionsmittel, die zur Verringerung von Stickoxiden in einen Abgasstrang eingeführt werden. Das flüssige Reduktionsmittel wird in einem Tank gelagert und wird über eine Leitung vom Tank zum Dosiermodul gefördert. Das Dosiermodul umfasst ein Dosierventil, das von einer Haltevorrichtung oder einem Adapter aufgenommen wird. Dieser Adapter wird mit dem Dosierventil an dem Abgasrohr befestigt (siehe z.B. DE 102 41 698 A1).

Während des Betriebs wird das Ventil geschaltet, wodurch Schwingungen entstehen. Dies führt zu unerwünschten Geräuschen.

### Offenbarung der Erfindung

Die Erfindung ermöglicht eine kostengünstige Geräuschunterdrückung und erfordert bei der Montage keinen zusätzlichen Aufwand. Gleichzeitig werden die Geräusche, welche durch das Schalten des Reduktionsmittel-Dosierventils entstehen, wirkungsvoll unterdrückt. Ferner erlaubt die Erfindung eine effektive Unterdrückung des Körperschalls sowie des Luftschalls und ermöglicht gleichzeitig eine stabile Befestigung des Dosierventils.

Die Erfindung sieht eine Halterungsvorrichtung vor, die ein Reduktionsmittel-Dosierventil halten kann und ferner den Innenraum, in dem das Reduktionsmittel-Dosierventil vorgesehen ist, wirkungsvoll akustisch isoliert. Gemäß einem Aspekt der Erfindung dient die Halterungsvorrichtung zum einen zum Befestigen des Reduktionsmittel-Dosierventils und zum anderen zur Dämpfung der vom Reduktionsmittel-Dosierventil hervorgerufenen Schwingungen. Ein weiterer Aspekt der Erfindung liegt darin, dass die Halterungsvorrichtung Vibrationen des Dosierventils zumindest teilweise absorbiert und dadurch Luftschall sowie Körperschall dämpft. Ein weiterer Aspekt der Erfindung liegt darin, den Übergang von Körperschall bzw. Vibrationen von dem Dosierventil auf die Halterungsvorrichtung und/oder von der Halterungsvorrichtung auf eine daran anschließbar Abgasstrang-Führungseinrichtung zu unterdrücken und dadurch die Abgabe von Körperschall und von Luftschall zu dämpfen. Ein weiterer Aspekt der Erfindung sieht eine Dämpfung von Körperschall insbesondere durch Dämpfung von Längsschwingungen in Längsrichtung des Dosierventils vor, da die durch das Dosierventil vorgesehen Vibrationen vor allem entlang der Längsrichtung des Dosierventils verlaufen. Gemäß einem weiteren Aspekt der Erfindung dämpft die Halterungsvorrichtung auch Schall, der von dem Reduktionsmittel-Dosierventil in den umgebenden Luftraum übertragen wurde. In einigen Ausführungen der Erfindung wird vor allem der hochfrequente Anteil des vom Dosierventil erzeugten Schalls gedämpft.

Erfindungsgemäß umschließt die Halterungsvorrichtung einen Innenraum zur Aufnahme des Reduktionsmittel-Dosierventils und umfasst eine Schalldämpfungseinrichtung, zur Reduzierung der aus dem Innenraum austretenden Schallschwingungen.

Auf diese Weise hält die Halterungsvorrichtung das Reduktionsmittel-Dosierventil an seinem Platz und ermöglicht ferner die Dämpfung von Schall, der von den Dosierventil erzeugt wird.

Zunächst werden die Schwingungen des Reduktionsmittel-Dosierventils an die innere Kontaktfläche der Halterungsvorrichtung übertragen, vorzugsweise durch elastische Mittel, die die Schwingungen bzw. Vibrationen dämpfen.

Der Schall kann daraufhin durch zwei verschiedene Art und Weisen vermindert werden. Zum einen umfasst die Halterungsvorrichtung eines oder mehrere elastische Elemente, die in direktem mechanischen Kontakt mit dem Reduktionsmittel-Dosierventil stehen. Auf diese Weise können das oder die elastischen Elemente die Schwingungen absorbieren, die von dem Reduktionsmittel-Dosierventil verursacht werden. Ferner wird dadurch erreicht, dass nur ein geringer Teil der Schwingungen an die statischen äußeren Teile der Halterungsvorrichtung übertragen wird.

Zum anderen werden Schwingungen, die von dem Reduktionsmittel-Dosierventil in die Luft abgegeben wurden, mittels Luftschall-Dämpfungselemente abgeschwächt, die von der Halterungsvorrichtung in der Nähe oder direkt an dem Reduktionsmittel-Dosierventil vorgesehen werden. Gemäß einem Aspekt der Erfindung sehen diese Luftschall-Dämpfungselemente einen erhöhten Strömungswiderstand für Luft vor, beispielsweise durch ein Lochraster, das die Schallschwelle der Luft beim Durchtritt der Luft verringert. Als Luftschalldämpfungselemente eignen sich daher alle Vorrichtungen, die für durchströmende Luft einen erhöhten Strömungswiderstand bieten, beispielsweise entsprechende Gewebe. Insbesondere am Kopfbereich der Halterungsvorrichtung, in der das Schaltungselement des Reduktionsmittel-Dosierventils vorgesehen ist, in dem die Schwingungen hauptsächlich erzeugt werden, umfasst die umgebende Halterungsvorrichtung vorzugsweise viele kleine Öffnungen beziehungsweise Bohrungen, die dem dort entstehenden Luftschall mittels erhöhtem Strömungswiderstand dämpfen. Dadurch wird der radial von dem Dosierventil nach außen durch die Halterungsvorrichtung tretende Luftschall direkt beim Durchgang durch die entsprechende mechanische Dämpfungsstruktur der Halterungsvorrichtung gedämpft. Ferner verringert die dort vorgesehene mechanische Struktur den Körperschall.

Vorzugsweise wird die Schwingungsenergie durch Interferenzen reduziert, wobei dies einer breitbandigen Filterung entspricht. Ferner wird die im Kopfbereich vorgesehene Oberfläche, die den Körperschall abstrahlt, durch die Öffnungen auf ein Minimum reduziert. Gleichwohl wird durch das Vorsehen von Öffnungen die mechanische Stabilität der Halterungsvorrichtung nicht beeinträchtigt. Zudem ergibt sich durch den Luftdurchtritt eine erhöhte Kühlungswirkung der Halterungsvorrichtung.

Es sind insbesondere im Kopfbereich der Halterungsvorrichtung Perforationen vorgesehen, aufgrund von Interferenzen in der unmittelbaren Umgebung der schwingenden mechanischen Struktur die jeweiligen Schwingungen miteinander destruktiv überlagern, die von der Halterungsvorrichtung vorgesehen werden. Dies führt ebenfalls zu einer breitbandigen Filterwirkung hinsichtlich des abgestrahlten Schalls.

Die einzelnen entlang der Halterungsvorrichtung verteilten Perforationen beziehungsweise Öffnungen werden gemäß dem Huygens-Prinzip als einzelne Schaltquellen betrachtet, die durch gegenseitige Überlagerung sich gegenseitig zumindest teilweise auslöschen. Dies führt ebenfalls zu einer breitbandigen Filterung beziehungsweise Dämpfung. Daher sieht gemäß einem weiteren Aspekt der Erfindung die Halterungsvorrichtung eine Dämpfung durch eine phasenversetzte Schwingungsüberlagerung vor. Aufgrund der geführten Luftströmung kann so eine zumindest teilweise gegenseitige Auslöschung für die Außenraumwirkung der einzelnen Öffnungen erreicht werden.

Vorzugsweise umfasst die Halterungsvorrichtung einen Kopfbereich, der einen Kopfraum zylindrisch umschließt. Dieser entlang des Umfangs zylindrisch umschlossene Kopfraum kann ein Reduktionsmittel-Dosierventil aufnehmen, welches ebenfalls eine zylindrische Form aufweist. Erfindungsgemäß sind in dem Kopfbereich der Halterungsvorrichtung Schalldämpfungsöffnungen vorgesehen, die dem Reduktionsmittel-Dosierventil gegenüberliegen, wenn dies in dem Kopfraum eingebaut ist. Die zylindrische Umfangsfläche des Reduktionsmittel-Dosierventils ist somit zylindrisch von dem Kopfbereich der Halterungsvorrichtung umschlossen und dämpft so den von der umfänglichen Außenfläche des Dosierventils abgestrahlten Luftschall auf direktem Wege mittels Dämpfung durch erhöhten Strömungswiderstand. Der in dem Kopfraum aufgenommene Abschnitt des Reduktionsmittel-Dosierventils umfasst vorzugsweise einen Schließabschnitt des Ventils, in dem eine Mechanik zur Öffnung und Schließung des Ventils, beispielsweise mittels eines Aktuators, vorgesehen ist, die Körperschall, vor allem in Längsrichtung des Ventils, erzeugt. Wie bereits bemerkt, wird der erhöhte Strömungswiderstand durch die Schalldämpfungsöffnungen vorgesehen. In dieser Struktur sind daher die Luftschall-Dämpfungselemente in der direkten Ausbreitungsrichtung des Luftschalls vorgesehen.

In einer Ausführung der Halterungsvorrichtung umfasst diese Kühlrippen, die sich senkrecht zu einer Längsachse der Halterungsvorrichtung erstrecken. Die Kühlrippen sind vorzugsweise in einer radialen Ebene angeordnet, die senkrecht zu der Längsachse der Halterungsvorrichtung ist. Vorzugsweise sind die Kühlrippen scheibenförmig und rotationssymmetrisch zur Längsachse der Halterungsvorrichtung. Die Kühlrippen dienen der Wärmeabfuhr des Reduktionsmittel-Dosierventils. Da zum Zweck der Wärmeableitung die Kühlrippen nahe dem Reduktionsmittel-Dosierventil vorgesehen sind und vorzugsweise mechanischen Kontakt mit diesem aufweisen, haben diese einen wesentlichen Einfluss auf die Schallleitung. Erfindungsgemäß umfassen daher die Kühlrippen Öffnungen, die die Übertragung des Luftschalls und des Körperschalls einschränken. Diese Öffnungen sind senkrecht zur Kühlrippenebene angeordnet und vorzugsweise parallel zu der Längsachse der Halterungsvorrichtung. Durch das Vorsehen der Öffnungen werden die Kühlrippen verstärkt von der umgebenden Luft durchströmt, wodurch sich gleichzeitig eine bessere Wärmeableitung in die Umgehungsluft erzielen lässt.

Gemäß einer weiteren Ausführung der Erfindung umfasst die Halterungsvorrichtung an einer Anschlussstelle, die zum Befestigen an einen Abgasstrang dient, ein Dichtelement, das das aufgenommene Reduktionsmittel-Dosierventil abdichtet. Zur Abdichtung wird vorzugsweise ein elastisches Material verwendet, das das Reduktionsmittel-Dosierventil gasdicht mit einem Abgasstrang-Anschlussabschnitt verbindet. Gleichzeitig wird die Abdichtung erfindungsgemäß zur Dämpfung des Körperschalls verwendet, der von dem Reduktionsmittel-Dosierventil ausgeht. In einer ersten Ausführung umgreift die Abdichtung eine von dem Dosierventil weg führende Leitung, die mit dem Dosierventil verbunden ist. Gemäß einer weiteren Ausführung umgreift die Abdichtung weiterhin die Umfangs-Außenfläche des Reduktionsmittel-Dosierventils teilweise oder vollständig. Auf diese Weise kann eine Abdichtung vorgesehen werden, die bis zu dem Kopfbereich der Halterungsvorrichtung reicht und sich ferner noch in den Kopfbereich der Halterungsvorrichtung hineinerstrecken kann, die zum einen das Reduktionsmittel-Dosierventil abdichtet und zum anderen hinsichtlich der Schallausstrahlung isoliert. Daher erfüllt die Elastizität der Abdichtung, die zum abgedichteten Anschluss des Dosierventils notwendig ist, gleichzeitig den Zweck der Schalldämpfung.

Eine erfindungsgemäße Vorrichtung sieht eine elastische Halterung des Reduktionsmittel-Dosierventils vor, die in Längsrichtung, d.h. Axialrichtung des Dosierventils eine sehr geringe Federsteifigkeit aufweist. Da der in dem Dosierventil vorgesehene Aktuator vor allem durch starke Abbremsungen in Längsrichtung Körperschall als Längsvibrationen erzeugt, kann das Dosierventil gleichzeitig gut gedämpft und in radialer Richtung gehalten werden. Es werden elastische Elemente vorgesehen, die geeignet sind, das Dosierventil in der Halterungsvorrichtung halten, und das Dosierventil hinsichtlich insbesondere hochfrequenter Längsschwingungsanteile gegenüber der Halterungsvorrichtung zu isolieren.

Zum anderen eignen sich diese und/oder weitere Komponenten der Halterungsvorrichtung zur Dämpfung von Schwingungen durch Absorption. Dies kann beispielsweise durch eine Anzahl von Bördel-, Pressitz- oder Klebeverbindungen vorgesehen werden, die einzelne Blechteile der Halterungsvorrichtung miteinander verbinden. Ferner können Teile der Halterungsvorrichtung ausgeformt werden, um eine sehr geringe Steifigkeit in Axialrichtung des Reduktionsmittel-Dosiermoduls vorzusehen und gleichzeitig eine gute radiale Stabilität zu erreichen, beispielsweise durch Ausformen von Blechen mit geringen Stärken in Axialrichtung und mit vergleichsweise weit radial erstreckenden Hohlrippen.

Die Maßnahmen zur Luftschalldämpfung können beliebig mit den Maßnahmen zur Körperschalldämpfung kombiniert werden, beispielsweise können die in axialer Richtung stark elastischen Hohlrippen kleine Öffnungen zur Luftschalldämpfung aufweisen. Gleichermaßen können Blechabschnitte oder Komponenten aus elastischen Materialien verwendet werden, die Körperschall absorbieren und gleichzeitig die Überleitung von Körperschall unterbinden, beispielsweise Elastomere.

Erfindungsgemäß wird ferner ein Adapter vorgesehen, der eine erfindungsgemäße Halterungsvorrichtung umfasst, sowie Kontaktelemente zum Anschluss einer Reduktionsmittelzuführung, sowie Kontaktelemente zum Anschluss an einen Abgasstrang. Die Kontaktelemente können Schraubverbindungen, Flansche oder Bayonett-Verschlüsse beziehungsweise eine beliebige Kombination hiervon sein. Vorzugsweise sind die Öffnungen und die geometrischen Abmaße der jeweiligen Kontaktelemente an den jeweiligen Anschluss angepasst.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: eine Halterungsvorrichtung mit einem darin aufgenommenen Reduktionsmittel-Dosierventil und einen Abgasstrang, an dem die Halterungsvorrichtung befestigt ist;
- Figur 2: den Kopfbereich einer Ausführung der erfindungsgemäßen Halterungsvorrichtung;
- Figur 3a: den Kopfbereich einer weiteren Ausführung der erfindungsgemäßen Halterungsvorrichtung;
- Figur 3b: den Querschnitt der in Figur 3a dargestellten Rippe, die im unteren Abschnitt des Kopfteils von Figur 3a angeordnet ist;
- Figur 4a: eine technische Ausführung der erfindungsgemäßen Halterungsvorrichtung in einer Prinzipdarstellung;
- Figur 4b: ein detailliertes mechanisches Schaltbild der Ausführung von Figur 4a;
- Figur 4c: ein vereinfachtes mechanisches Schaltbild der Ausführung von Figur 4a;
- Figur 5: eine Ausführung der Erfindung zur Dämpfung von Längsvibrationen durch axial- bzw. längselastische Halterungselemente;
- Figur 6: eine Ausführung der Erfindung zur Dämpfung von Körperschall durch Absorption sowie durch axialelastische Halterungselemente;
- Figur 7: eine Ausführung der Erfindung zur Dämpfung von Körperschall durch Absorption sowie durch axialelastische Halterungselemente, die ferner Kühlelemente aufweist; und
- Figur 8: eine weitere Ausführung der Erfindung zur Dämpfung von Körperschall durch Absorption sowie durch axialelastische Halterungselemente.

### Ausführungsformen der Erfindung

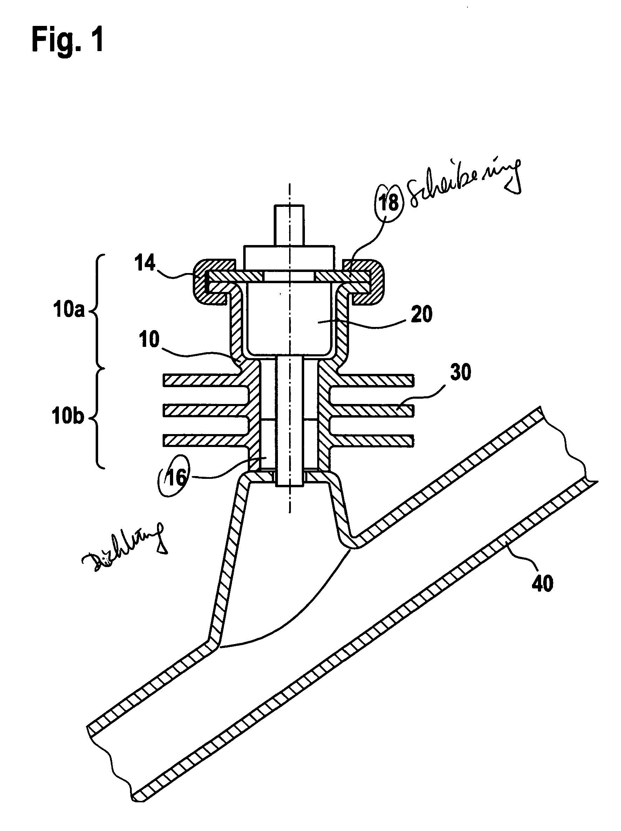

In der Figur 1 ist eine Halterungsvorrichtung 10 dargestellt, die dafür vorgesehen ist, ein Reduktionsmittel-Dosierventil 20 zu halten. Die Halterungsvorrichtung weist einen im Wesentlichen zylindrischen Innenraum auf, der das darin vorgesehene Reduktionsmittel-Dosierventil 20 umfänglich umschließt. Der obere Abschnitt 10a der Halterungsvorrichtung 10 umfasst ein Kopfteil, welches den Schließabschnitt des Reduktionsmittel-Dosierventils 20 umfasst. In diesem Schließabschnitt des Dosierventils erzeugt ein Aktuator, der zur Ventilsteuerung vorgesehen ist, die zu dämpfenden Schließgeräusche. An den Schließabschnitt des Reduktionsmittel-Dosierventils schließt sich eine Röhre an, die den Schließabschnitt mit dem Innenraum des Abgasstrangs 40 verbindet. Ein Zuleitungsabschnitt 10b der erfindungsgemäßen Halterungsvorrichtung 10 umschließt diese Röhre 16. Da die Röhre einen kleineren Durchmesser als der Schließabschnitt des Dosierventils 20 aufweist, ist auch der umgebende Zuleitungsabschnitt in 10b im Durchmesser kleiner als der Kopfabschnitt 10a des Reduktionsmittel-Dosierventils. Im Zuleitungsabschnitt 10b der Halterungsvorrichtung dient eine Abdichtung 16 dazu, die Röhre des Reduktionsmittel-Dosierventils mit dem Zuleitungsabschnitt 10b der Halterungsvorrichtung 10 zu dichten. Die Dichtung umfasst vorzugsweise ein elastisches Material. Die Röhre des Reduktionsmittel-Dosierventils tritt durch eine Öffnung des Abgasstrangs 40 hindurch, wobei an der Stelle des Durchtritts vorzugsweise ein minimaler Abstand zwischen der Außenseite der Röhre und der Öffnung des Abgasstrangs 40 besteht. Dieser minimale Abstand ist vorzugsweise so ausgelegt, dass trotz einer durch Vibration hervorgerufene Bewegung der Röhre des Reduktionsmittel-Dosierventils immer noch einen ausreichenden Abstand zu der Öffnung des Abgasstrangs vorgesehen wird, um zu vermeiden, dass Körperschall von dem Reduktionsmittel-Dosierventil über die Röhre an die Abgasstrang-Führung übertragen wird.

Der Kopfabschnitt 10a der erfindungsgemäßen Halterungsvorrichtung 10 weist an einem oberen Ende des Kopfabschnitts 10a eine nach außen gerichtete Wölbung auf, die sich senkrecht zur Längsachse der Halterungsvorrichtung 10 erstreckt. Ein Scheibenring 18, der ebenfalls senkrecht zur Längsachse der Halterungsvorrichtung 10 ausgebildet ist, liegt auf der Auswölbung auf. Ein Clip beziehungsweise eine Klammer 14 umgreift den Scheibenring und die Auswölbung umfänglich in einem federnden Presssitz, sodass der Scheibenring 18 auf die Auswölbung gepresst wird. Gleichzeitig weist der Scheibenring eine innere konzentrische Öffnung auf, in der das Reduktionsmittel-Dosierventil an einem oberen Ende des Schließabschnitts gehalten werden kann, das vorzugsweise eine Nut aufweist, in die der Scheibenring eingreift. Auf diese Weise wird das Reduktionsmittel-Dosierventil nicht nur an einem ersten Punkt 16 durch die Dichtung, sondern auch an einem zweiten Punkt durch den Scheibenring 18 gehalten, der am entgegengesetzten Ende des Reduktionsmittel-Dosierventils angeordnet ist.

Vorzugsweise definiert die Innenfläche der Halterungsvorrichtung einen Innenraum, der das Reduktionsmittel-Dosierventil 20 aufnehmen kann, wobei zwischen der Außenseite des Reduktionsmittel-Dosierventils und der Innenseite der Halterungsvorrichtung ein minimaler Abstand gewährleistet bleibt. Dieser minimale Abstand gewährleistet, dass Schwingungen des Reduktionsmittel-Dosierventils nicht direkt auf die Halterungsvorrichtungen übertragen werden. Die an dem unteren Ende im Zuleitungsbereich 10b der Halterungsvorrichtung 10 vorgesehene Dichtung 16 ist schon alleine auf Grund der Dichtungsfunktion elastisch ausgebildet und erlaubt so eine Dämpfung der Schwingung und vermindert gleichzeitig eine Übertragung des Körperschalls des Dosierventils 20. Am oberen Ende des Kopfabschnitts 10a der Halterungsvorrichtung 10 hält der Scheibenring das Reduktionsmittel-Dosierventil 20 in Position. Da der Scheibenring 18 ausgebildet ist, in eine Nut des Reduktionsmittel-Dosierventils einzugreifen, ist dieser vorzugsweise zur besseren Montage elastisch ausgebildet. Gleichzeitig kann die Elastizität des Scheibenrings 18 vorgesehen werden, um auch am oberen Ende der Halterungsvorrichtung 10a Übertragung von Schwingungen des Reduktionsmittel-Dosierventils 20 zu vermeiden und um gleichzeitig diese Schwingungen zu absorbieren.

Zusammenfassend sieht die erfindungsgemäße Halterungsvorrichtung 10 eine 2-Punkt-Halterung für das Reduktionsmittel-Dosierventil vor, die auf Grund der jeweils elastisch ausgeführten Aufhängung die Übertragung von Körperschall gewonnenen Reduktionsmittel-Dosierventil auf die Halterungsvorrichtung unterbindet. Somit kann die Halterungsvorrichtung direkt an die Abgasstrang-Führung 40 angebracht werden, ohne dass die Gefahr besteht, dass wesentliche Anteile des Schallgeräuschs des Dosierventils auf das Kraftfahrzeug übertragen wird.

In weiteren Ausführungen der erfindungsgemäßen Halterungsvorrichtung umschließt die Dichtung 16 auch Teile des Schließabschnitts des Reduktionsmittel-Dosierventils, um eine weitere Schalldämpfung vorzusehen. Ferner kann der Scheibenring 18 neben elastischem Material auch zusätzliche Perforationen aufweisen, die Luftschall durch erhöhten Strömungswiderstand dämpfen. Ferner weist gemäß einer bevorzugten Ausführung der Erfindung der Zuleitungsabschnitt 10b der Halterungsvorrichtung Kühlrippen 30 auf, die sich radial von der Längsachse der Halterungsvorrichtung 10 weg erstrecken. Diese sind vorzugsweise mit Öffnungen ausgestattet, die sich in der Richtung der Längsachse erstrecken und ebenfalls zur Dämpfung von Luftschall beitragen, der von der Halterungsvorrichtung abgestrahlt wird. Ferner umfasst der Kopfabschnitt 10a der Halterungsvorrichtung 10 Perforationen, die sich im Wesentlichen senkrecht zur Längsachse radial nach außen erstrecken, um den Luftschall zu dämpfen, der von dem Schließabschnitt des Reduktionsmittel-Dosierventils 20 in radialer Richtung nach außen abgestrahlt wird. Die Öffnungen in dem Kopfabschnitt sowie in den Kühlungsrippen sehen zum einen eine Dämpfung durch Strömungsverluste der Luftvibrationen vor, und zum anderen eine Dämpfung durch Interferenzen beziehungsweise Beugung durch phasenversetzte Schwingungsüberlagerung unter den einzelnen Öffnungen. Vorzugsweise wird durch diese Luftschalldämpfung eine breitbandige Filterwirkung erzielt, wobei die einzelnen Öffnungen als einzelne Schallquellen zu interpretieren sind, deren gegenseitige Interferenz zur breitbandige Filterung beziehungsweise Dämpfung führt.

Durch die Öffnungen beziehungsweise Perforation in den Kühlrippen wird ferner erreicht, dass die Körperschall-abstrahlende Rippenoberfläche verringert ist, wobei insbesondere im Zwischenraum zwischen den einzelnen Rippen Interferenzen, Beugungs- und Reflektionseffekte zu weiteren Dämpfungseffekten beitragen. Gemäß einer Ausführung werden die Rippen aus Flüsterblech gefertigt, welches aus zwei Teilblechen besteht, zwischen dem schalldämpfendes Material eingebracht ist. Ferner können die Rippen aus Lochblech gefertigt sein. Zur weiteren Dämpfung können schallschluckende Materialien wie Stahlwolle oder Gewebe mit ähnlichen Effekten verwendet werden, wobei diese Materialien vorzugsweise um den Kopfabschnitt der Halterungsvorrichtung herum und/oder zwischen beziehungsweise an den Kühlrippen angeordnet werden. Diese Dämpfungsmaterialien verhindern durch diese Anordnung zum einen das Abstrahlen von Luftschall und zum anderen die Dämpfung von bereits abgestrahltem Luftschall, der in der Nähe der Halterungsvorrichtung anzutreffen ist.

Gemäß einer nicht dargestellten Ausführung weist auch der Kopfabschnitt 10a sich radial nach außen erstreckenden Kühlrippen 30 auf, die ebenfalls vorzugsweise mit Perforationen ausgestattet sind, um den Luftschall zu dämpfen. Am unteren Ende der Halterungsvorrichtung 10, die an den Abgasstrang 40 anschließt, ist vorzugsweise ein Schraub-, Steck- oder Flanschverbindung vorgesehen, um ein Montage der Halterungsvorrichtung mit dem Abgasstrang 40 zu erlauben. Ebenso sieht das obere Kopfende des Reduktionsmittel-Dosierventils vorzugsweise ein Anschlusselement vor, das beispielsweise eine Schraubverbindung, eine Steckverbindung, eine Flanschverbindung vorsieht. In einer weiteren Ausführung ist der Clip 14 federnd bzw. dämpfend vorgesehen und sieht daher eine weitere Dämpfung des Körperschalls vor.

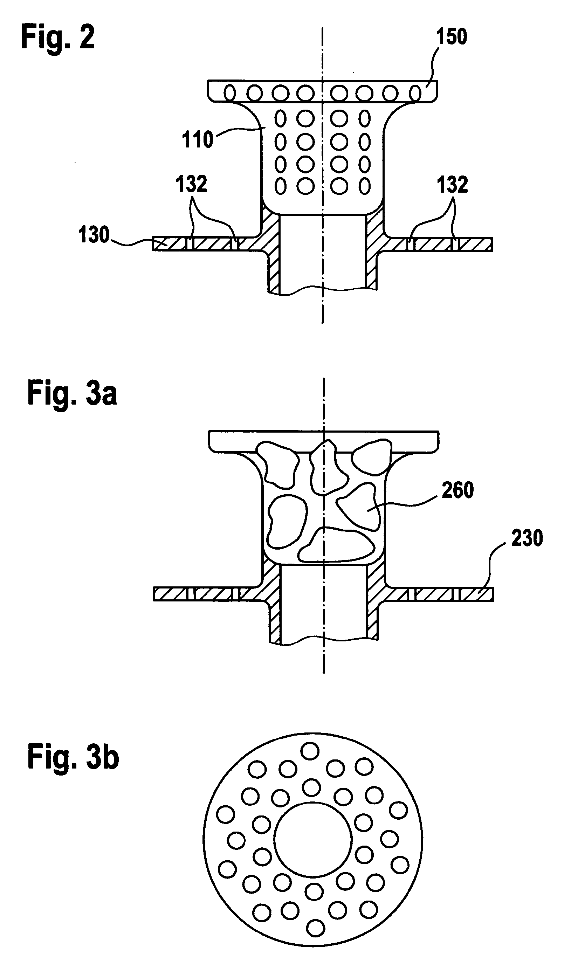

In der Figur 2 ist der Kopfabschnitt 110 sowie eine Kühlrippe 130 dargestellt. Der Kopfabschnitt 110, der geeignet ist, einen Schließabschnitt eines Reduktionsmittel-Dosierventils 20 aufzunehmen, weist eine Vielzahl kleiner Öffnungen auf. Ferner weist der Kopfabschnitt einen nach radial nach außen gerichtete Ausstülpung 150 auf, die eine Kontaktfläche für einen Scheibenring definiert. Die Öffnungen haben einen relativ kleinen Durchmesser, beispielsweise zwischen 0,05 mm und 2 mm, und können in ein Blech, das die Halterungsvorrichtung bildet, eingestanzt oder gebohrt sein. Vorzugsweise beträgt der Durchmesser der Öffnungen zwischen 0,1 mm und 1 mm. In einer besonders bevorzugten Ausführungsform beträgt der Durchmesser der Öffnungen zwischen 0,2 mm und 0,5 mm. Die Öffnungen sind vorzugsweise regelmäßig angeordnet, beispielsweise in Reihen. Alternativ kann jede Öffnung zu allen jeweiligen direkten Nachbarn den gleichen Abstand aufweisen. Ebenso sind in der dargestellten Kühlrippe 130 Öffnungen 132 vorgesehen, die sich parallel zur Längsachse der Halterungsvorrichtung erstrecken und die zur Dämpfung dienen. Im allgemeinen entstehen durch den kleinen Durchmesser der Öffnungen Verwirbelungen, die, neben dem erhöhten Strömungswiderstand, für eine weitere Abbremsung der Luftschallschnelle führen. Ferner hat die perforierte Kühlrippe im Vergleich zu einer unperforierten Kühlrippe eine verringerte effektive Schallabstrahlungsoberfläche.

In der Figur 3 ist ein Kopfabschnitt einer weiteren Ausführung der erfindungsgemäßen Halterungsvorrichtung dargestellt, der ebenfalls Öffnungen 260 umfasst. Jedoch sind die in Figur 2 dargestellten Öffnungen kreisrund und haben einen geringen Durchmesser, während die Öffnungen 260 in der Figur 3 größer sind und eine unregelmäßige Form aufweisen. Auf Grund von Beugungseffekten und Interferenzen an der Innenkante der Öffnungen 260 ergeben sich Differenzeffekte und Beugungseffekte, die zur weiteren Dämpfung beitragen. Diese Beugungs- und Differenzeffekte ergeben sich auch bei den in Figur 2 dargestellten Öffnungen. Der Kopfabschnitt, der in Figur 3a dargestellten Halterungsvorrichtung weist ferner eine Kühlrippe 230 auf, die in der Figur 3b im Querschnitt dargestellt ist.

Die Öffnungen der in Figur 3b dargestellten Kühlrippe sind gleichmäßig um den Mittelpunkt der Kühlrippe verteilt und vorzugsweise rund. Die Öffnungen können konzentrische Ringe bilden und einen gleichmäßigen Radialabstand zueinander aufweisen. Die Halterungsvorrichtung sieht erfindungsgemäß Mittel vor, die den Austritt von Schall aus dem Dosierventil als Luftschall in die Luft und als Körperschall in Befestigungselemente reduzieren. Die Vibrationen des Reduktionsmittel-Dosierventils werden zum einen direkt durch elastische Halterung gedämpft, beispielsweise mittels elastischen Materialien oder Federn, und zum anderen wird die Übertragung von dadurch erzeugten Körperschall an weitere Fahrzeugteile, ebenfalls durch elastische Materialien oder Federn unterbunden. Ferner wird abgestrahlter Luftschall durch die Verwendung von Luftschall-Dämpfungselementen verringert, die auf dem Prinzip erhöhten Strömungswiderstands kleiner Öffnungen sowie auf Verwirbelungen beruhen. Ferner ergeben sich Dämpfungseffekte durch Beugung und Interferenz der Öffnungen. Die Öffnungen werden vorzugsweise mit kleinem Durchmesser vorgesehen und sind in dem Kopfabschnitt der Halterungsvorrichtung und/oder in sich radial erstreckenden Kühlrippen vorgesehen. Die Öffnungen in den Kühlrippen dämpfen bereits aus der Halterungsvorrichtung ausgetretenen Luftschall, während die Öffnungen in dem Kopfabschnitt der Halterungsvorrichtung die Übertragung vom Luftschall von dem inneren der Halterungsvorrichtung in die Umgebung dämpfen. Zur Dämpfung des bereits abgestrahlten Luftschalls und zur Verringerung der Abstrahlung von Luftschall durch Körperschall sind, neben Öffnungen, die als Durchgangslöcher ausgebildet sind, auch als Sacklöcher ausgebildete Öffnungen geeignet.

Vorzugsweise wird das Reduktionsmittel-Dosierventil über eine dämpfende Verbindung mit dem Reduktionsmitteltank verbunden, um zu verhindern, dass Körperschall von dem Reduktionsmittel-Dosierventil über den Reduktionsmitteltank oder über die dorthin führende Fluidverbindung an Fahrzeugteile übertragen wird.

Im Allgemeinen wird die Schallausbreitung von Körperschall durch Impedanzsprünge des akustischen Mediums gedämpft, beispielsweise die Verwendung von Gummi- oder Federelementen, die an starren Elementen angekoppelt sind, welche Vibrationen unterliegen.

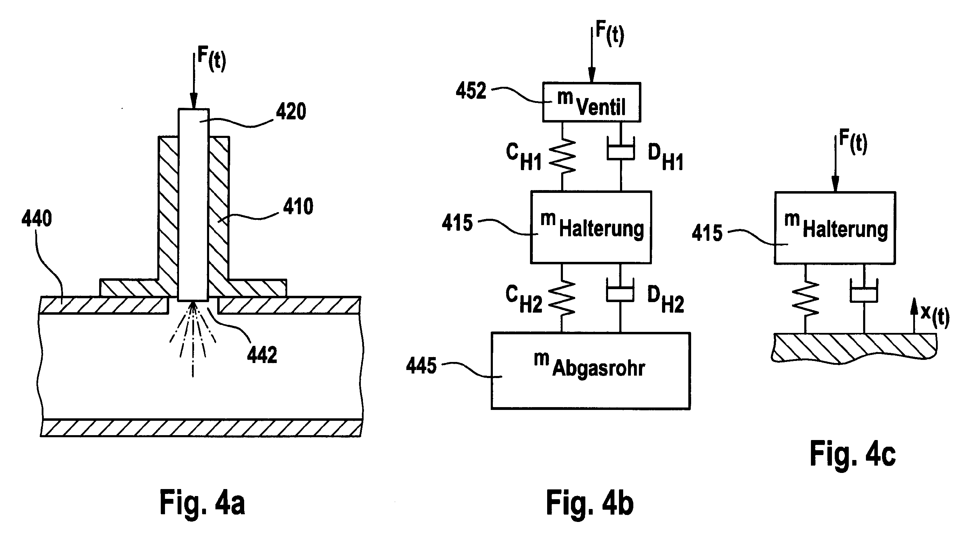

Die Figur 4a zeigt eine technische Ausführung der erfindungsgemäßen Haltungsvorrichtung gemäß eines weiteren Aspekts der vorliegenden Erfindung, wobei die Figur 4b das entsprechende mechanische Ersatzmodell im Detail und Figur 4c das mechanische Ersatzmodell in vereinfachter Form darstellt.

Die Figur 4a zeigt eine Abgasstrang-Führungseinrichtung in Form eines Abgasrohrs 440, das eine Öffnung 442 aufweist. Durch diese Öffnung 442 wird Reduktionsmittel in den Abgasstrang eingesprüht. Daher ist an dem Abgasrohr 440 in der Höhe der Öffnung 442 die erfindungsgemäße Halterungsvorrichtung 410 montiert, in deren Mitte konzentrisch das Dosierventil 420 eingepasst ist. In dem Dosierventil 420 ist ein Ventilanker vorgesehen, der sich beim Schalten des Dosierventils bewegt und in Längsrichtung des Dosierventils auf den Ventilsitz schlägt. Die erfindungsgemäße Halterungsvorrichtung wird üblicherweise für Dosierventile verwendet, deren Aktuatoreinrichtung eine Bewegung entlang der Längsachse ausführt, wobei die Bewegung zum Schalten des Dosierventils verwendet wird. Das beim Schalten des Dosierventils entstehende Geräusch wird im Wesentlichen von dieser Bewegung entlang der Längsrichtung hervorgerufen, insbesondere wenn die Bewegung schnell abgebremst wird, beispielsweise durch den mechanischen Kontakt zwischen Ventilanker und Ventilsitz. Dieses Schaltgeräusch, welches im Wesentlichen die Geräuschbelästigung hervorruft, wird bei mangelhafter Dämpfung an das Abgasrohr 440 übertragen und von diesem durch die große Außenoberfläche des Abgasrohrs verstärkt. Gemäß dem in den Figuren 4a - 4c dargestellten Aspekt der Erfindung wird daher insbesondere die Abdämpfung des Körperschalls betrachtet, der durch das Schlagen innerhalb des Dosierventils entlang dessen Längsachse verursacht wird.

Erfindungsgemäß wird das Frequenzverhalten anhand der Art des Geräuschs betrachtet, das beispielsweise durch das Schlagen des Ventilankers in den Ventilsitz ausgelöst wird. Daher sieht die Halterungsvorrichtung gemäß diesem Aspekt der Erfindung eine Ankoppelung mit ausgeprägtem Tiefpassverhalten vor, so dass in dem Dosiermodul erzeugte hochfrequente Längsschwingungen durch die erfindungsgemäße Halterungsvorrichtung besonders stark abgedämpft werden. Aus diesem Grund wird die Funktionsweise und die auf das Dosierventil wirkende Längskraft F (t) betrachtet, anhand derer die erfindungsgemäße Halterungsvorrichtung ausgebildet ist.

Die Figur 4b zeigt das mechanische Ersatzmodell der technischen Ausführung von Figur 4a, in der eine Kraft F (t), die durch den Schaltimpuls des Dosierventils erzeugt wird, zunächst auf die Ventilmasse 425 wirkt. Diese ist über ein Federelement C_{H1}, welches die Federsteifigkeit der Dosierventil-Halterung und die Dämpfung D_{H1}, welche die Dämpfung der Dosierventil-Halterung wiedergibt, mit der Masse 415 der Halterungsvorrichtung verbunden. Diese Masse 415 ist wiederum über eine Feder C_{H2} und dem Dämpfungselement D_{H2} mit der Masse 445 des Abgasrohrs verbunden. Hierbei geben C_{H2} und D_{H2} die Federsteifigkeit bzw. die Dämpfung der mechanischen Verbindung zwischen der Halterungsvorrichtung und dem Abgasrohr wieder. Mit anderen Worten ist die Dosierventilmasse über eine gedämpfte Federung (C_{H1}, parallel zu D_{H1}) mit der Masse 415 der Halterungsvorrichtung verbunden. Die Masse der Halterungsvorrichtung ist in dem Ersatzmodell wiederum über eine gedämpfte Federung (Federelement C_{H2}, parallel zu Dämpfungselement D_{H2}) mit der Masse des Abgasrohrs 445 verbunden. Die gedämpfte Federung zwischen der Masse 415 der Halterungsvorrichtung 410 und der Masse 445 des Abgasrohrs 440 gibt somit die Dämpfung und die Federsteifigkeit der mechanischen Verbindung zwischen der Halterungsvorrichtung 410 und dem Abgasrohr 440 wieder. Um die Ankopplung des Dosierventils erfindungsgemäß an das Abgasrohr mit einem ausgeprägten Tiefpassverhalten vorzusehen, kann beispielsweise eine große Adaptermasse, eine geringe Adaptersteifigkeit oder eine hohe Dämpfung zwischen Ventil und Abgasrohr, oder eine Kombination hiervon vorgesehen werden.

Die Figur 4c zeigt ein vereinfachtes mechanisches Schaltbild der Verknüpfung zwischen Dosierventil, Halterungsvorrichtung und Abgasrohr, das in Figur 4b dargestellt ist. Im wesentlichen greift die durch das Schalten erzeugte Kraft an der Halterungsmasse 415 an, die über eine gedämpfte Federung, die den Verbindungseigenschaften der Halterungsvorrichtung entspricht, mit einer feststehenden Ebene (das Abgasrohr) verbunden ist. Auch aus dem Schaltbild von Figur 4c kann abgeleitet werden, dass für ein ausgeprägtes Tiefpassverhalten, d.h. eine starke Dämpfung der hohen Frequenzen, eine hohe Masse der Halterungsvorrichtung, eine geringe Steifigkeit der Halterungsvorrichtung und/oder eine hohe Dämpfung zwischen Dosierventil und Abgasrohr erzeugt werden kann.

Gemäß eines ersten Ansatzes wird das Dosierventil möglichst weich an das Abgasrohr angekoppelt, um eine sehr geringe Federsteifigkeit der mechanischen Verbindung zwischen Dosierventil 420 und Abgasrohr 440 vorzusehen.

Um dies zu erreichen, wird gemäß einer Ausführung der Erfindung das Dosierventil biegeweich in der Halterungsvorrichtung 510 aufgehängt. Die biegeweiche d.h. insbesondere entlang der Längsachse des Dosierventils (und der Halterung) elastische Aufhängung wird beispielsweise vorgesehen, indem ein elastischer Werkstoff verwendet wird. Beispielsweise eignen sich hierfür Gummi oder auch Federelemente, beispielsweise aus Metall, mit langem Federweg und geringer Steifigkeit.

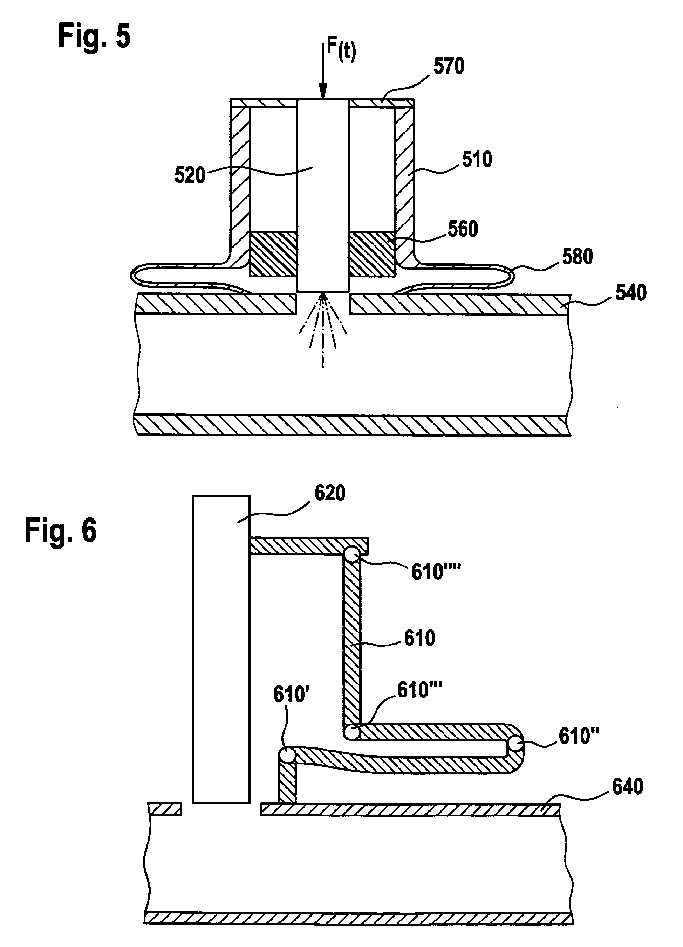

Die Figur 5 zeigt beide Aufhängungsmöglichkeiten. In Figur 5 ist eine radiale Fixierung durch eine Masse 560 aus elastischem Werkstoff dargestellt. Somit wird in radialer Richtung eine gewisse Steifigkeit zur stabilen radialen Aufhängung des Dosieradapters vorgesehen und gleichzeitig in vertikaler Richtung, d.h. entlang der Längsachse des Dosierventils, eine weiche Aufhängung, insbesondere zur Dämpfung hochfrequenter Körperschallanteile vorgesehen. Das weiche Elastomerelement 560 dient zur radialen Führung und ist als Ring ausgebildet, dessen Innenfläche in direktem mechanischen Kontakt mit dem Dosierventil 520 ist, beispielsweise im Presssitz, und dessen Außenfläche die Innenfläche der Halterungsvorrichtung im Presssitz berührt. Wenn daher radiale Bewegungen auftreten, d.h. senkrecht zur Längsachse des Dosierventils, kommt die Presssteifigkeit für Longitudinalverschiebungen des elastischen Werkstoffs, d.h. in radialer Richtung, zum Tragen. Bei vertikalen Bewegungen, d.h. entlang der Längsachse des Dosierventils, übt das Dosierventil 520 Scherkräfte auf den elastischen Werkstoff 560 auf, so dass in vertikaler Richtung eine geringere Steifigkeit vorgesehen wird. Mit anderen Worten sieht das elastische Dämpfungselement 560 bei gleichem Federweg in radialer Richtung eine deutlich höhere Rückstellkraft vor, als beim gleichen Federweg in vertikaler Richtung, da in vertikaler Richtung Scherkräfte gefedert werden, wohingegen in radialer Richtung Längskräfte gefedert werden. Über den elastischen Werkstoff zwischen Dosierventil und Halterungsvorrichtung werden daher Vibrationen gedämpft, die vom Dosierventil auf die Halterungsvorrichtung übertragen werden. Zur Befestigung des elastischen Werkstoffs 560 kann ferner eine Klebeverbindung verwendet werden.

In gleicher Weise wird zur Verringerung der Vibrationen, die von dem Dosierventil 520 auf die Halterungsvorrichtung 510 übertragen werden, eine biegeweiche axiale Aufhängung 570 vorgesehen, die in Längsrichtung des Dosierventils eine sehr geringe Steifigkeit aufweist und die eine zweite Aufhängung für das Dosierventil bietet. Gleichzeitig sieht die biegeweiche axiale Aufhängung 570 eine höhere Steifigkeit in Radialrichtung und insbesondere eine starke Dämpfung hochfrequenten Körperschalls vor. Gemäß einer bevorzugten Ausführung der Erfindung wird als biegeweiche axiale Aufhängung ein biegeweicher Blechbügel verwendet, wobei die entsprechende Federsteifigkeit durch eine geringe Dicke des Blechs erreicht wird. Ferner können auch andere elastische Materialien verwendet werden, beispielsweise Gummi oder andere Elastomere.

Die biegeweiche axiale Aufhängung 570 ist an einem Ende des Dosierventils 520 vorgesehen, das entfernt zu dem Abgasrohr angeordnet ist, wohingegen das weiche Elastomerelement 560 an dem entgegengesetzten Ende des Dosierventils vorgesehen ist, das sich am Abgasrohr 540 befindet. Dadurch wird eine elastische axiale Aufhängung vorgesehen, die gleichzeitig eine gewisse radiale Steifigkeit aufweist, um das Dosierventil am Ort zu halten. Die biegeweiche axiale Aufhängung 570 und das weiche Elastomerelement 560 verringern somit in starkem Maße die axialen Vibrationen des Dosierventils, d.h. entlang dessen Längsachse, auf die Halterungsvorrichtung 510.

Gemäß einer weiteren bevorzugten Ausführung wird eine weitere Maßnahme vorgesehen, die eine Übertragung insbesondere von axialen Vibrationen von der Halterung 510 auf das Abgasrohr 540 zu verringern, wobei gleichzeitig eine gewisse radiale Führung bzw. Steifigkeit gewährleistet bleiben soll. Daher umfasst die in Figur 5 dargestellte Ausführung der Erfindung eine elastische Ankopplung der Halterungsvorrichtung an das Abgasrohr über eine Hohlrippe 580 mit kleiner Wandstärke. Die Federsteifigkeit in axialer Richtung der Hohlrippe ergibt sich durch das Verhältnis von Länge zu Dicke der Hohlrippe sowie aus Materialkoeffizienten. Daher ist die Hohlrippe als weite Ausstülpung vorgesehen, deren Radialausdehnung deutlich größer als die Wanddicke ist. Gleichzeitig ergibt sich in Axialrichtung nur ein geringer Platzbedarf, da die Hohlrippe als Schlaufe ausgeführt ist, deren Ende sich in der Nähe ihres Anfangs befindet. Ferner sollte der Abstand zwischen Anfang und Ende der Hohlrippe derart beschaffen sein, dass Vibrationen mit einer gewissen maximalen Amplitude abgefangen werden können, ohne dass sich Anfang und Ende der Schlaufe der Hohlrippe 580 berühren. Vorzugsweise ist die Hohlrippe einteilig mit der Halterungsvorrichtung 510 ausgebildet, wobei alternativ die Hohlrippe auch an die Halterungsvorrichtung 510 angepresst oder angeklebt sein kann. Zudem kann die Halterungsvorrichtung 510 bei zweiteiliger Ausführung aus einem Material mit höherer Steifigkeit beschaffen sein, als das Material der Hohlrippe 580. Bei einteiliger Ausführung kann die Wanddicke der Halterungsvorrichtung 510 deutlich größer als die Wanddicke der Hohlrippe sein, die wiederum, wie bereits vermerkt, für die Federeigenschaften der Hohlrippe maßgeblich ist.

Die Hohlrippe 580, die obere Halterung 570, die insbesondere in axialer Richtung elastisch ist, und die untere Halterung 560, die ebenfalls insbesondere in axialer Richtung elastisch ist, dämpfen die Übertragung von Körperschall. Während die obere und die untere Halterung die Übertragung von Dosierventil auf die Halterungsvorrichtung 510 dämpfen, ist die Hohlrippe durch ihre große Elastizität in Axialrichtung zur Verminderung der Übertragung von Körperschall von der Halterungsvorrichtung 510 auf das Abgasrohr 540 vorgesehen. Bei diesen Elementen 560, 570 und 580 ist vor allem wichtig, dass diese in Axialrichtung federn, um den in starkem Masse anfallenden axialgerichteten Körperschall, d.h. Axialvibrationen, in der Übertragung zu hindern. Ferner schließen diese Elemente den Luftraum zwischen Dosierventil und Halterungsvorrichtung ab und dämpfen dadurch gleichzeitig den Luftschall. Darüber hinaus haben die Dämpfungselemente 560, 570 und 580 eine schwingungsabsorbierenden Effekt, der mittels geeigneter Materialien (Gummi, Flüsterblech) und Strukturen (Perforationen) verstärkt werden kann.

Gemäß eines weiteren Ansatzes zur Erhöhung insbesondere der Dämpfung axialer Schwingungen wird zwischen dem Dosierventil und dem Abgasrohr eine hohe Dämpfung vorgesehen. Die in Figur 6 dargestellte Ausführung weist daher mechanische Verbindungen auf, die eine besonders hohe Dämpfung aufweisen. Daher wird der Adapter vorzugsweise aus einzelnen Blechteilen aufgebaut, die über Bördelungen miteinander verbunden sind. Die Bördelverbindungen werden vorgesehen, um eine hohe Materialdämpfung innerhalb des Adapters zu erzeugen. Dadurch kann die vom Dosierventil erzeugte Vibration abgeschwächt werden. Insbesondere erlauben Bördelverbindungen eine Dämpfung von hochfrequentem Körperschall bzw. Vibrationen.

Die Figur 6 zeigt eine Ausführung der erfindungsgemäßen Halterungsvorrichtung 610, die mehrere Bördelverbindungen aufweist. Daher ist ein erstes Blechteil, das zur Befestigung an ein Abgasrohr 640 dient, über eine Bördelverbindung 610' mit einem weiteren Blechteil verbunden, das eine untere Hälfte einer Hohlrippe bildet. Diese untere Hälfte der Hohlrippe wird über eine weitere Bördelverbindung 610" mit einer oberen Hälfte der Hohlrippe verbunden. Eine weitere Bördelverbindung 610"' verbindet die obere Hälfte der Hohlrippe mit einem Wandabschnitt. Der Wandabschnitt verbindet die Hohlrippe über eine Bördelverbindung 610"" mit einem radialen Halterungsabschnitt, der zur Halterung eines Dosierventils 620 an einem Ende des Dosierventils 620 vorgesehen ist, das von dem Abgasrohr 640 entfernt gelegen ist. Durch die Bördelverbindungen 610' bis 610"" werden daher zusätzliche Dämpfungselemente vorgesehen, die den Körperschall, der durch die Halterungsvorrichtung 610 geleitet wird, vermindern. Gleichzeitig sieht die in Figur 6 dargestellte Ausführung der Erfindung über den radialen Halterungsabschnitt eine möglichst weiche Ankopplung des Ventils vor, wobei der radiale Halterungsabschnitt vorzugsweise wie die obere Halterung des Dosierventils von Figur 5 ausgebildet ist, d.h. beispielsweise mittels einer biegeweichen axialen Aufhängung mit geringer Steifigkeit in axialer Richtung. In gleicher Weise sieht die Hohlrippe der Ausführung von Figur 6, neben der Dämpfung durch die Bördelverbindungen 610", 610"', eine weitere in axialer Richtung stark federnde Verbindung vor, die zur Dämpfung des Schallgeräuschs, insbesondere von hohen Frequenzen, des Dosierventils geeignet ist. Der prinzipielle Unterschied der Dämpfung durch die Bördelverbindungen 610' - 610"" zu der elastischen Aufhängung von Figur 5 liegt darin, dass die elastische Aufhängung den Übergang von Vibrationen durch starke axiale Vibrationen verhindert, wohingegen die Bördelverbindungen bereits auf die Halterungsvorrichtung übergegangene Vibrationen selbst dämpft.

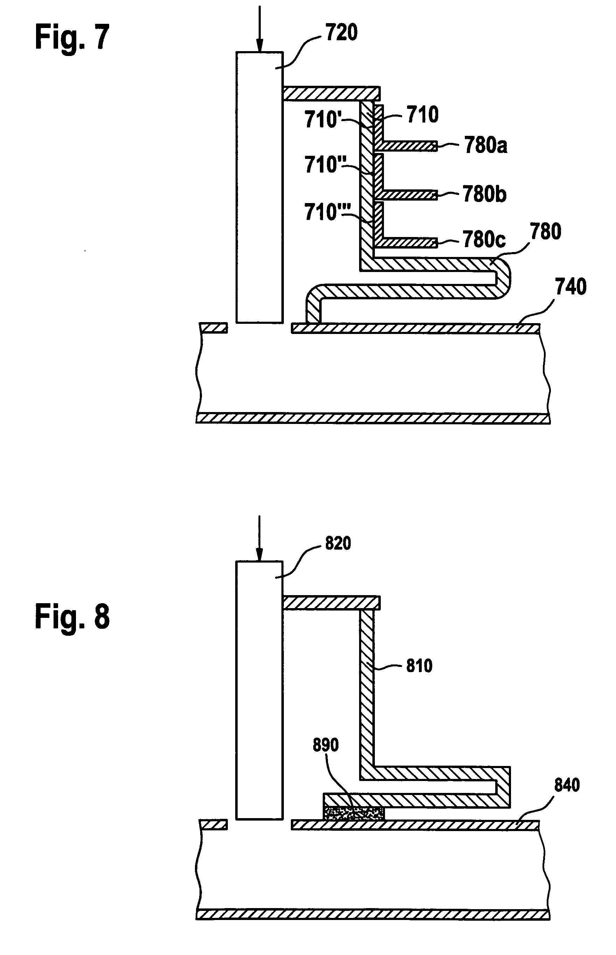

Die Figur 7 zeigt eine erfindungsgemäße Ausführung, in der bereits auf die Halterungsvorrichtung 710 übergegangene Vibrationen gedämpft werden. Alternativ zu den dämpfenden Bördelverbindungen von Figur 6 werden in der Ausführung von Figur 7 Pressverbindungen verwendet, die in der Halterungsvorrichtung 710 auftretende Schwingungen dämpfen. Daher weist die Figur 7 ebenfalls mehrere Blechteile auf, die über Pressverbindungen 710' - 710"' miteinander verbunden sind. Insbesondere diese Pressverbindungen dämpfen die in die Halterungsvorrichtung übergegangenen Vibrationen. In der Figur 7 sind Kühlrippen 780a - 780c auf die Halterungsvorrichtung aufgepresst. An diesem Abschnitt umfasst die Halterungsvorrichtung einen zylindrischen Abschnitt, der eine zylindrische Außenfläche aufweist. Auf diese Außenfläche sind die Kühlrippen umlaufend nacheinander in axialer Richtung mittels Presssitz aufgebracht und überdecken die Außenseite des zylindrischen Abschnitts der Halterungsvorrichtung fast vollständig. In der Figur 7 ist ferner eine Hohlrippe 780 vorgesehen, die aufgrund der geringen Steifigkeit in axialer Richtung die Ankopplung von Axialvibrationen von der Halterungseinrichtung auf das Abgasrohr 740 verhindert bzw. dämpft.

Gemäß einer weiteren, nicht dargestellten Ausführung sind die einzelnen in den Figuren 6 und 7 dargestellten Blechteile zumindest teilweise oder vollständig aus Flüstermetall ausgebildet, wobei Flüstermetall ein Werkstoff mit hoher innerer Dämpfung ist. Dies kann beispielsweise erreicht werden, indem ein Flüstermetallblech aus zwei dünnen Metallblechen hergestellt wird, zwischen denen eine vibrationsdämpfende Struktur und/oder ein vibrationsdämpfendes Material zwischengelegt ist. Hierdurch wird vor allem hochfrequenter Körperschall gedämpft.

Die Figur 8 zeigt eine weitere Ausführung der erfindungsgemäßen Halterungsvorrichtung, bei der eine keramische Abdichtung 890 zwischen Halterungsvorrichtung 810 und Abgasrohr 840 zwischengelegt ist. Die keramische Abdichtung sieht somit eine stabile mechanische Verbindung zwischen der Halterungsvorrichtung 810 und dem Äußeren des Abgasrohrs 840 vor. Gleichzeitig weist die keramische Abdichtung durch ihre Material- und Verbindungseigenschaften eine hohe innere Werkstoffdämpfung vor. Auch die in Figur 8 dargestellte Ausführung weist eine Hohlrippe auf, deren radiale Federwirkung im Vergleich zur axialen Federwirkung relativ steif ist. Mit anderen Worten unterbindet die Hohlrippe die Übertragung von Längs- bzw. Axialvibrationen von der Halterungsvorrichtung 810 auf das Abgasrohr 840 durch starke axiale Federwirkung, wohingegen die keramische Abdichtung 890 eine hinzutretende starke Dämpfung zwischen der Halterungsvorrichtung 810 und dem Auspuffrohr 840 vorsieht, indem die keramische Abdichtung 890 axiale Vibrationen größtenteils schluckt, insbesondere im Hochfrequenzbereich.

In einer weiteren, nicht dargestellten alternativen Ausführung wird die Masse des Dosierventils und/oder die Masse der Halterungsvorrichtung sehr groß vorgesehen. Dadurch wird eine Trägheit erreicht, die die Entstehung und den Übergang von Vibrationen von dem Dosierventil auf das an die Halterungsvorrichtung angeschlossene Abgasrohr vermindert. Dadurch lässt sich eine Dämpfung insbesondere der hohen Frequenzen erreichen, da die meisten Vibrationen durch die hohe Trägheit des Dosierventils und/oder der Halterungsvorrichtung 810 nicht auftreten und/oder an das Abgasrohr übertragen werden.

Die oben genannten Maßnahmen können einzeln oder in Kombination verwendet werden, um eine möglichst effektive Unterdrückung des Schaltgeräuschs zu erreichen. Die Maßnahmen gelten im Einzelnen der verringerten Abstrahlung von Luftschall von dem Dosierventil, der Halterungsvorrichtung oder auch dem Abgasrohr, welches ebenso schallgedämpft werden kann. Ferner betreffen diese Maßnahmen die Reduzierung der Übertragung von Körperschall von dem Dosierventil auf die Halterungsvorrichtung und von der Halterungsvorrichtung auf das Abgasrohr. Ferner umfassen die Maßnahmen die Dämpfung von bereits in die Halterungsvorrichtung eingeleiteten Körperschall, beispielsweise durch bestimmte Strukturen oder Verbindungsarten wie Bördelung oder Presssitz. Die Verwendung der elastischen Materialien und/oder Strukturen verhindert daher zum einen die Übertragung von Körperschall und dient ferner dem Absorbieren von Körperschall bzw. Luftschall. Die Übertragung von Körperschall wird im Allgemeinen durch die Einführung von Impedanzsprüngen in den Medien vorgesehen, die den Übertragungsweg des Körperschalls bilden. Auch der Übergang des Körperschalls in Luftschall durch Abstrahlung über eine große Fläche kann unterdrückt werden, indem beispielsweise kleine Flächen oder geeignete Materialien verwendet werden, die die Abstrahlung von Luftstrahl durch einen Körper verringern. Die elastischen Materialien und die betrachteten Verbindungstechniken sind insbesondere für die Dämpfung von hochfrequentem Luftschall bzw. Körperschall geeignet. Die besondere Behandlung von hochfrequentem Schall in diesem Dokument trägt der besonderen Empfindlichkeit des menschlichen Ohrs für hohe Frequenzen Rechnung. Ferner werden durch die meisten üblichen mechanischen Komponenten hohe Frequenzen stärker übertragen als tiefe Frequenzen. Zudem eignen sich vor allem hohe Frequenzen zur Anregung von Resonanzen in kleinen Hohlräumen, beispielsweise in Abgasrohren. Schließlich entsteht bei dem Auftreffen von einem mechanischen Teil auf ein anderes, wie im Falle des Schließens des Dosierventils, ein Geräusch mit vor allem hohen Frequenzanteilen, ähnlich der Si-Funktion. Aus diesen Gründen liegt ein Schwerpunkt auf der Dämpfung insbesondere der hochfrequenten Anteile von Körperschall und Luftschall.

Die Aufhängung des Dosierventils ist in den betrachteten Ausführungen eine Zweipunktaufhängung, wobei das sich axiale in Längsrichtung, senkrecht zum Abgasrohr erstreckende Dosierventil an zwei Stellen gehalten wird, die voneinander entfernt sind. Alternativ kann auch eine Dreipunktaufhängung verwendet werden, oder es kann eine Halterung vorgesehen werden, die das Dosierventil über einen gewissen Abschnitt derart hält, dass es auch bei Vibrationen die Position in der radialen Ebene kaum verändert. Ferner wird die Halterung des Dosierventils im Allgemeinen derart vorgesehen, dass axiale Bewegungen in gewissem Maße möglich sind, da die Vibrationen in axialer Richtung wesentlich stärker auftreten als in vertikaler Richtung und daher eine Dämpfung mit sehr geringer Steifigkeit in axialer Richtung vorteilhaft ist.

## Patentansprüche

1. Halterungsvorrichtung (10, 110, 410, 510, 610, 710) zur Halterung eines Reduktionsmittel-Dosierventils (20, 120, 420, 520, 620, 720), wobei die Halterungsvorrichtung (10, 110, 410, 510, 610, 710) einen Innenraum zumindest teilweise umschließt, der zur Aufnahme des Reduktionsmittel-Dosierventils (20, 120, 420, 520, 620, 720) vorgesehen ist, **dadurch gekennzeichnet, dass** die Halterungsvorrichtung (10, 110, 410, 510, 610, 710) eine Schalldämpfungseinrichtung umfasst, die aus dem Innenraum austretende Schallschwingungen dämpft.

2. Halterungsvorrichtung (10, 110, 410, 510, 610, 710) nach Anspruch 1, wobei die Schalldämpfungseinrichtung mit Luftschall-Dämpfungselementen (18, 30, 260, 570) ausgestattet ist.

3. Halterungsvorrichtung (10, 110, 410, 510, 610, 710) nach Anspruch 1 oder 2, wobei die Luftschall-Dämpfungselemente (260) für Luft durchlässig sind und einen erhöhten Strömungswiderstand bieten.

4. Halterungsvorrichtung (10, 110, 410, 510, 610, 710) nach Anspruch 2 oder 3, wobei die Luftschall-Dämpfungselemente (30, 260) Luftschall durch phasenversetzte Schwingungsüberlagerung dämpfen.

5. Halterungsvorrichtung (10, 110, 410, 510, 610, 710) nach einem der vorangehenden Ansprüche, wobei die Schalldämpfungseinrichtung ein elastisches Element (16, 18, 560, 570, 580, 780) umfasst, das den Innenraum zumindest teilweise umgibt und aus dem Innenraum austretenden Körperschall dämpft.

6. Halterungsvorrichtung (10, 110, 410, 510, 610, 710) nach einem der vorangehenden Ansprüche, wobei die Schalldämpfungseinrichtung ferner ein elastisches Verbindungselement (570, 580) umfasst, das Körperschall dämpft, der von Vibrationen des Reduktionsmittel-Dosiermoduls (20, 120, 420, 520, 620, 720) stammt, und das eine elastische Schnittstelle zur Befestigung der Halterungsvorrichtung (10, 110, 410, 510, 610, 710) an eine Abgasstrang-Führungseinrichtung (540, 640, 740) vorsieht.

7. Halterungsvorrichtung (10, 110, 410, 510, 610, 710) nach einem der vorangehenden Ansprüche, wobei die Schalldämpfungseinrichtung ferner zwei elastische Aufhängungselemente umfasst, die Körperschall dämpfen, jeweils eine elastische Aufhängungsschnittstelle für das Reduktionsmittel-Dosiermodul (20, 120, 420, 520, 620, 720) vorsehen, und entlang einer Längsachse der Halterungsvorrichtung (10, 110, 410, 510, 610, 710) zu einander beabstandet angeordnet sind.

8. Halterungsvorrichtung (10, 110, 410, 510, 610, 710) nach Anspruch 5, 6 oder 7, wobei das elastische Element, und/oder das elastische Verbindungselement und/oder mindestens eines der zwei elastischen Aufhängungselemente entlang der Betätigungsrichtung eines Aktuators des aufzunehmenden Reduktionsmittel-Dosierventils (20, 120, 420, 520, 620, 720) eine hohe Elastizität aufweist.

9. Halterungsvorrichtung (10, 110, 410, 510, 610, 710) nach Anspruch 6 oder 7, wobei elastisches Verbindungselement oder eines der zwei elastischen Aufhängungselemente eine Abdichtung zur Aufnahme zumindest eines Abschnitts des Reduktionsmittel-Dosierventils (20, 120, 420, 520, 620, 720) ist, wobei die Abdichtung eingerichtet ist, das Reduktionsmittel-Dosierventil (20, 120, 420, 520, 620, 720) elastisch in der Halterungsvorrichtung (10, 110, 410, 510, 610, 710) zu halten und die Übertragung von Körperschall, der von dem Reduktionsmittel-Dosierventil stammt, in die Halterungsvorrichtung (10, 110, 410, 510, 610, 710) zu dämpfen.

10. Halterungsvorrichtung (10, 110, 410, 510, 610, 710) nach einem der vorangehenden Ansprüche, die einen Kopfbereich (10a) umfasst, der einen Kopfraum zur Aufnahme eines Schließabschnitts des Reduktionsmittel-Dosierventils (20, 120, 420, 520, 620, 720) zylindrisch umschließt und umfänglich angeordnete Luftschalldämpfungsöffnungen (260) aufweist.

11. Halterungsvorrichtung (10, 110, 410, 510, 610, 710) nach einem der vorangehenden Ansprüche, die sich radial erstreckende Kühlrippen (30, 230, 780a-c) aufweist, die mit einer Vielzahl von Luftschall-Dämpfungsöffnungen ausgestattet sind.

## Claims

1. Mounting device (10, 110, 410, 510, 610, 710) for mounting a reducing agent dosing valve (20, 120, 420, 520, 620, 720), with the mounting device (10, 110, 410, 510, 610, 710) at least partially surrounding an interior space which is provided for holding the reducing agent dosing valve (20, 120, 420, 520, 620, 720), **characterized in that** the mounting device (10, 110, 410, 510, 610, 710) has a sound damping unit which dampens sound vibrations emerging from the interior space.

2. Mounting device (10, 110, 410, 510, 610, 710) according to Claim 1, with the sound damping unit being equipped with air-borne sound damping elements (18, 30, 260, 570).

3. Mounting device (10, 110, 410, 510, 610, 710) according to Claim 1 or 2, with the air-borne sound damping elements (260) being permeable to air and generating an increased flow resistance.

4. Mounting device (10, 110, 410, 510, 610, 710) according to Claim 2 or 3, with the air-borne sound damping elements (30, 260) damping air-borne sound by means of phase-offset vibration superposition.

5. Mounting device (10, 110, 410, 510, 610, 710) according to one of the preceding claims, with the sound damping unit comprising an elastic element (16, 18, 560, 570, 580, 780) which at least partially surrounds the interior space and dampens body-borne sound emerging from the interior space.

6. Mounting device (10, 110, 410, 510, 610, 710) according to one of the preceding claims, with the sound damping unit also comprising an elastic connecting element (570, 580) which dampens body-borne sound originating from vibrations of the reducing agent dosing module (20, 120, 420, 520, 620, 720) and which serves to provide an elastic interface for fastening the mounting device (10, 110, 410, 510, 610, 710) to an exhaust section guiding device (540, 640, 740).

7. Mounting device (10, 110, 410, 510, 610, 710) according to one of the preceding claims, with the sound damping unit also comprising two elastic suspension elements which dampen body-borne sound, provide in each case one elastic suspension interface for the reducing agent dosing module (20, 120, 420, 520, 620, 720) and are arranged spaced apart from one another along a longitudinal axis of the mounting device (10, 110, 410, 510, 610, 710).

8. Mounting device (10, 110, 410, 510, 610, 710) according to Claim 5, 6 or 7, with the elastic element and/or the elastic connecting element and/or at least one of the two elastic suspension elements having a high degree of elasticity in the actuating direction of an actuator of the reducing agent dosing valve (20, 120, 420, 520, 620, 720) to be held.

9. Mounting device (10, 110, 410, 510, 610, 710) according to Claim 6 or 7, with elastic connecting element or one of the two elastic suspension elements being a seal for holding at least one section of the reducing agent dosing valve (20, 120, 420, 520, 620, 720), with the seal being designed to hold the reducing agent dosing valve (20, 120, 420, 520, 620, 720) elastically in the mounting device (10, 110, 410, 510, 610, 710) and to dampen the transmission of body-borne sound, which originates from the reducing agent dosing valve, into the mounting device (10, 110, 410, 510, 610, 710).

10. Mounting device (10, 110, 410, 510, 610, 710) according to one of the preceding claims, which mounting device comprises a head region (10a) which cylindrically surrounds a head chamber for holding a closing section of the reducing agent dosing valve (20, 120, 420, 520, 620, 720) and which has circumferentially arranged air-borne sound damping openings (260).

11. Mounting device (10, 110, 410, 510, 610, 710) according to one of the preceding claims, which mounting device has radially extending cooling fins (30, 230, 780a-c) which are equipped with a multiplicity of air-borne sound damping openings.

## Revendications

1. Dispositif de fixation (10, 110, 410, 510, 610, 710) pour la fixation d'une soupape de dosage d'un agent de réduction (20, 120, 420, 520, 620, 720), dans lequel le dispositif de fixation (10, 110, 410, 510, 610, 710) entoure au moins partiellement un espace interne qui est prévu pour recevoir la soupape de dosage d'agent de réduction (20, 120, 420, 520, 620, 720), **caractérisé en ce que** le dispositif de fixation (10, 110, 410, 510, 610, 710) comprend un dispositif d'amortissement des bruits qui amortit les oscillations sonores sortant de l'espace interne.

2. Dispositif de fixation (10, 110, 410, 510, 610, 710) selon la revendication 1, dans lequel le dispositif d'amortissement des bruits est muni d'éléments d'amortissement des bruits aériens (18, 30, 260, 570).

3. Dispositif de fixation (10, 110, 410, 510, 610, 710) selon la revendication 1 ou 2, dans lequel les éléments d'amortissement des bruits aériens (260) sont perméables à l'air et offrent une résistance à l'écoulement accrue.

4. Dispositif de fixation (10, 110, 410, 510, 610, 710) selon les revendications 2 ou 3, dans lequel les éléments d'amortissement des bruits aériens (30, 260) amortissent les bruits aériens par superposition d'oscillations déphasées.

5. Dispositif de fixation (10, 110, 410, 510, 610, 710) selon l'une quelconque des revendications précédentes, dans lequel le dispositif d'amortissement des bruits comprend un élément élastique (16, 18, 560, 570, 580, 780) qui entoure au moins en partie l'espace interne et qui amortit les bruits de structure provenant de l'espace interne.

6. Dispositif de fixation (10, 110, 410, 510, 610, 710) selon l'une quelconque des revendications précédentes, dans lequel le dispositif d'amortissement des bruits comprend en outre un élément de connexion élastique (570, 580) qui amortit les bruits structurels qui proviennent des vibrations du module de dosage d'agent de réduction (20, 120, 420, 520, 620, 720), et qui fournit une interface élastique pour la fixation du dispositif de fixation (10, 110, 410, 510, 610, 710) à un dispositif de guidage de la ligne d'échappement (540, 640, 740).

7. Dispositif de fixation (10, 110, 410, 510, 610, 710) selon l'une quelconque des revendications précédentes, dans lequel le dispositif d'amortissement des bruits comprend en outre deux éléments d'accrochage élastiques, qui amortissent les bruits structurels, qui fournissent à chaque fois une interface d'accrochage élastique pour le module de dosage d'agent de réduction (20, 120, 420, 520, 620, 720), et qui sont disposés à distance l'un de l'autre le long d'un axe longitudinal du dispositif de fixation (10, 110, 410, 510, 610, 710).

8. Dispositif de fixation (10, 110, 410, 510, 610, 710) selon les revendications 5, 6 ou 7, dans lequel l'élément élastique, et/ou l'élément de connexion élastique et/ou au moins l'un des deux éléments d'accrochage élastiques le long de la direction d'actionnement d'un actionneur de la soupape de dosage d'agent de réduction (20, 120, 420, 520, 620, 720) présente une grande élasticité.

9. Dispositif de fixation (10, 110, 410, 510, 610, 710) selon les revendications 6 ou 7, dans lequel l'élément de connexion élastique ou l'un des deux éléments d'accrochage élastiques est une garniture d'étanchéité pour recevoir au moins une portion de la soupape de dosage d'agent de réduction (20, 120, 420, 520, 620, 720), la garniture d'étanchéité étant prévue pour fixer de manière élastique la soupape de dosage d'agent de réduction (20, 120, 420, 520, 620, 720) dans le dispositif de fixation (10, 110, 410, 510, 610, 710), et pour amortir le transfert au dispositif de fixation (10, 110, 410, 510, 610, 710) des bruits de structure qui proviennent de la soupape de dosage d'agent de réduction.

10. Dispositif de fixation (10, 110, 410, 510, 610, 710) selon l'une quelconque des revendications précédentes, qui comprend une région de tête (10a), qui entoure de manière cylindrique un espace de tête pour recevoir une portion de fermeture de la soupape de dosage d'agent de réduction (20, 120, 420, 520, 620, 720), et qui présente des ouvertures d'amortissement des bruits aériens (260) disposées sur la périphérie.

11. Dispositif de fixation (10, 110, 410, 510, 610, 710) selon l'une quelconque des revendications précédentes, qui présente des nervures de refroidissement s'étendant radialement (30, 230, 780a-c), qui sont munies d'une pluralité d'ouvertures d'amortissement des bruits aériens.
